# EUROPÄISCHE PATENTSCHRIFT

(11) **EP 4 113 444 B1**
(45) Veröffentlichungstag und Bekanntmachung des Hinweises auf die Patenterteilung: **30.07.2025**
(21) Anmeldenummer: 21182224.2
(22) Anmeldetag: 29.06.2021
(51) Int. Cl.: G06T 11/00

(54) **COMPUTERIMPLEMENTIERTES VERFAHREN ZUR BILDQUALITÄTSVERBESSERUNG IN DER COMPUTERTOMOGRAPHIE, COMPUTERTOMOGRAPHIEEINRICHTUNG, COMPUTERPROGRAMM UND ELEKTRONISCH LESBARER DATENTRÄGER**
COMPUTER IMPLEMENTED METHOD FOR IMPROVING IMAGE QUALITY IN COMPUTER TOMOGRAPHY, COMPUTED TOMOGRAPHY APPARATUS, COMPUTER PROGRAM, AND ELECTRONICALLY READABLE DATA CARRIER
PROCÉDÉ MIS EN UVRE PAR ORDINATEUR PERMETTANT D'AMÉLIORER LA QUALITÉ D'IMAGE DANS LA TOMOGRAPHIE ASSISTÉE PAR ORDINATEUR, DISPOSITIF DE TOMOGRAPHIE ASSISTÉE PAR ORDINATEUR, PROGRAMME INFORMATIQUE ET SUPPORT DE DONNÉES LISIBLE DE MANIÈRE ÉLECTRONIQUE

(43) Veröffentlichungstag der Anmeldung: 04.01.2023
(73) Patentinhaber: Siemens Healthineers AG, 91301 Forchheim (DE)
(72) Erfinder: Allmendinger, Thomas, 91301 Forchheim (DE); Sunnegaardh, Johan, 91052 Erlangen (DE)
(74) Vertreter: Siemens Healthineers Patent Attorneys

(56) Entgegenhaltungen:
- US-A1- 2016 253 818
- JOHAN SUNNEGAARDH ET AL.: "A New Method for Windmill Artifact Reduction", INTERNATIONAL MEETING ON FULLY THREE-DIMENSIONAL IMAGE RECONSTRUCTION IN RADIOLOGY AND NUCLEAR MEDICINE, LAKE TAHOE, CALIFORNIA, USA, 2013, XP002804952

## Beschreibung

Die Erfindung betrifft ein computerimplementiertes Verfahren zur Bildqualitätsverbesserung einer Zeitreihe von Computertomographiebilddatensätzen, wobei
- in einem Aufnahmevorgang mit unterschiedlichen Projektionsgeometrien aufgenommene Projektionsbilder eines Aufnahmebereichs als eine Projektionsbildserie bereitgestellt werden,
- die Projektionsgeometrien wenigstens durch einen Projektionswinkel in einer zu einer Rotationsachse, um die eine Röntgenquelle einer verwendeten Computertomographieeinrichtung entlang einer Aufnahmetrajektorie rotiert, senkrechte Ebene beschrieben sind,
- die Projektionsbilder in dem Aufnahmevorgang in ihren Projektionswinkeln ein Gesamtwinkelintervall von wenigstens 360° abdecken, und
- zur Rekonstruktion der Computertomographiebilddatensätze jeweils zeitlich aufeinanderfolgend aufgenommene erste Projektionsbilder, die in ihren Projektionswinkeln ein Teilwinkelintervall von weniger als 360°, insbesondere von 180° oder weniger, abdecken, der Projektionsbildserie verwendet werden. Daneben betrifft die Erfindung eine Computertomographieeinrichtung, ein Computerprogramm und einen elektronisch lesbaren Datenträger.

Die Computertomographie ist eine etablierte Bildgebungstechnik, insbesondere in der Medizin. Dabei wird eine Strahlungsquelle auf einer Aufnahmetrajektorie, häufig einer Kreis- oder Spiralbahn, um einen Patienten bzw. einen Aufnahmebereich des Patienten bewegt, wobei unter Nutzung unterschiedlicher Projektionsgeometrien, insbesondere unterschiedlicher Projektionswinkel, Projektionsbilder aufgenommen werden. Bei modernen Computertomographieeinrichtungen sind derartige Projektionsbilder meist zweidimensional, so dass durch bekannte Rekonstruktionstechniken, beispielsweise gefilterte Rückprojektion und/oder iterative Rekonstruktion, aus den zweidimensionalen Projektionsbildern dreidimensionale Computertomographiebilddatensätze berechnet werden können, die beispielsweise in Form von Schichtbildstapeln vorliegen können. In einer Computertomographieeinrichtung kann beispielsweise eine Aufnahmeanordnung oder wenigstens die Röntgenquelle rotierbar gelagert sein, wobei Spiraltrajektorien beispielsweise durch eine Bewegung der Patientenliege senkrecht zur Rotationsebene erzeugt werden können, so dass sich die Röntgenquelle relativ zum Aufnahmebereich auf einer Spiralbahn (Helixbahn) bewegt.

Zur Rekonstruktion von Computertomographiedatensätzen werden im Stand der Technik üblicherweise Rekonstruktionsalgorithmen der gefilterten Rückprojektion (FBP - Filtered Back Projection) eingesetzt. Im Fall der Ermittlung dreidimensionaler Computertomographiebilddatensätze aus zweidimensionalen Projektionsbildern existiert keine mathematisch exakte Lösung, so dass es bei der Rekonstruktion zu Artefakten kommen kann, bei denen man aufgrund der häufig verwendeten Kegelstrahlgeometrie auch von Kegelstrahlartefakten spricht. Die Kegelstrahlartefakte können insbesondere abhängig von dem gewählten Pitch bei Spiraltrajektorien und/oder von der Detektorkollimierung auftreten.

Zur Korrektur solcher Kegelstrahlartefakte wurden bereits Korrekturalgorithmen vorgeschlagen, welche beispielsweise durch Modellierung des Bildgebungs- und Rekonstruktionsvorgangs eine Abschätzung der Artefakte und deren Entfernung erreichen. In einem Artikel von Johan Sunnegaardh et al., "A New Method for Windmill Artifact Reduction", 12th International Meeting on Fully Three-Dimensional Image Reconstruction in Radiology and Nuclear Medicine, Lake Tahoe, California, USA, 2013, wurde ein iteratives Vorgehen zur Korrektur von Kegelstrahlartefakten vorgeschlagen. Das dortige Vorgehen basiert auf der Annahme, dass Windmühlenartefakte als möglicher Fall der Kegelstrahlartefakte durch Kanten hohen Kontrasts, die orthogonal zur z-Richtung (senkrecht zur Rotationsebene) verlaufen bzw. eine nicht verschwindende Komponente ihres Normalenvektors in z-Richtung aufweisen, verursacht werden, wobei diese Kanten durch einen nicht linearen Bildverarbeitungsoperator aus einer noch unkorrigierten Rekonstruktion rückgewonnen werden können. Mithin wird zur Vorbereitung ein Basisdatensatz, der Windmühlenartefakte und andere Artefakte enthält, rekonstruiert. Ein Bildverarbeitungsoperator, dort ein Kantenzurückgewinnungsoperator, wird eingesetzt, um einen bearbeiteten Basisdatensatz, hier einen Kantendatensatz, zu ermitteln. Durch Modellierung des Aufnahmevorgangs mittels Vorwärtsprojektion basierend auf dem bearbeiteten Basisdatensatz und der Rekonstruktion, wobei dort auch Effekte der Interpolation in der Vorwärtsprojektion und der Rückprojektion als Artefakte ausgenommen werden können, lässt sich ein Artefaktdatensatz ermitteln, der von dem Basisdatensatz abgezogen werden kann. Dieses Verfahren kann iterativ durchgeführt werden.

Es sei angemerkt, dass es grundsätzlich auch denkbar ist, solch einen Korrekturalgorithmus ohne Anwendung eines Bildverarbeitungsoperators, wie im Beispiel dem Kantenrückgewinnungsoperator, durchzuführen, mithin direkt auf dem nicht weiterverarbeiteten Basisdatensatz den Aufnahmevorgang und die Rekonstruktion zu modellieren. Hierbei sind jedoch oft deutlich mehr Iterationen erforderlich.

Moderne Computertomographieeinrichtungen erlauben es, die Röntgenquelle bzw. die Aufnahmeanordnung äußerst schnell um den Aufnahmebereich des Patienten zu bewegen, um die unterschiedlichen Projektionsgeometrien zu realisieren. Daher wird computertomographische Bildgebung zunehmend genutzt, um auch dynamische Vorgänge innerhalb des Patienten abzubilden, beispielsweise bezüglich der Herzbildgebung. Allerdings ist es häufig so, dass eine gewünschte Zeitauflösung nur dann erreicht wird, wenn bezüglich der Rotation der Röntgenquelle nicht Projektionsbilder verwendet werden, die einen kompletten 360°-Umlauf abdecken, sondern die Zahl zur Rekonstruktion eines entsprechenden Computertomographiebilddatensatzes verwendeten ersten Röntgenbilder auf ein Teilwinkelintervall, beispielsweise von 180° oder 180° plus Fächerwinkel, eingeschränkt wird. Eine solche Technik kann beispielsweise auch als "Quickscan" bezeichnet werden. Soll beispielsweise die Herzbewegung, insbesondere über mehrere Herzzyklen, nachverfolgt werden, kann in einem zusammenhängenden oder getriggerten/gegateten Aufnahmevorgang eine Aufnahme einer Projektionsbilderserie erfolgen, die insgesamt wenigstens einen kompletten Umlauf der Röntgenquelle, mithin ein Gesamtwinkelintervall von wenigstens 360°, abdecken. Aus dieser Projektionsbildserie können nun beispielsweise einer bestimmten Bewegungsphase des Herzzyklus zugeordnete, zeitlich aufeinanderfolgend aufgenommene erste Projektionsbilder ausgewählt werden, um hieraus einen Computertomographiebilddatensatz für die entsprechende Bewegungsphase zu rekonstruieren.

Anders ausgedrückt kann die Zeitauflösung in den Computertomographiebilddatensätzen optimiert werden, indem die zu jedem Computertomographiebilddatensatz beitragende Menge an Projektionsdaten durch eine äußere Gewichtung der Projektionsbilder auf das notwendige Minimum reduziert wird. Häufig werden für derartige Rekonstruktionen ("Quickscans") bestimmte Werte für die Teilwinkelintervalle festgelegt, beispielsweise bei Computertomographieeinrichtungen mit einer Röntgenquelle als 180° oder 180° plus Fächerwinkel, bei Computertomographieeinrichtungen mit zwei Röntgenquellen (Dual-Source-System) 90° oder 95° pro Detektor.

Probleme bei solchen zeitaufgelöst optimierten Computertomographiebilddatensätzen treten immer dann auf, wenn sich das zur Rekonstruktion verwendete Datenintervall zwischen zwei Computertomographiebilddatensätzen verschiebt. Wird beispielsweise für einen ersten Computertomographiebilddatensatz ein Teilwinkelintervall von 0° bis 180° verwendet, für einen weiteren ein Teilwinkelintervall von 40° bis 220°, können durch solche unterschiedlichen Teilwinkelintervalle unterschiedliche HU-Werte zumindest teilweise in den Computertomographiebilddatensätzen auftreten. Mit anderen Worten sind die HU-Werte in den Computertomographiebilddatensätzen vom tatsächlich ausgewählten Teilwinkelintervall für die weniger als 360° nutzende Rekonstruktion abhängig. Ursachen für diese Winkelabhängigkeit der HU-Werte sind Beiträge der Streustrahlung, welche einen Bestandteil der gemessenen Rohdaten bilden und für den Fall eines nicht rotationssymmetrischen Objekts/Aufnahmebereichs diese Teilwinkelintervallabhängigkeit der HU-Werte auslösen, zum anderen können derartige Artefakte aufgrund der Aufnahmegeometrie auftreten.

Zur Stabilisierung der HU-Werte bei Quick-Scan-Rekonstruktionen wurde beispielsweise in DE 10 2007 061 935 A1 eine Lösung vorgeschlagen. In dem dortigen Verfahren zur Qualitätssteigerung von computertomographischen Aufnahmeserien wird im Wesentlichen vorgeschlagen, aus denselben Rohdaten zwei Bildvolumina erzeugen, die dieselbe Rekonstruktionsparametrisierung nutzen, wobei jedoch im ersten Bildvolumen nur erste Projektionsbilder des Teilwinkelintervalls zur Rekonstruktion verwendet werden, im zweiten Bildvolumen jedoch zweite Projektionsbilder, die wenigstens ein Winkelintervall von 360° abdecken. Das 360°-Bildvolumen hat eine implizite Rotationssymmetrie und erzeugt somit stabile HU-Werte, während es im Gegenzug eine deutlich schlechtere Zeitauflösung aufweist, da mehr Daten in der Rekonstruktion verwendet werden. Es wird nun vorgeschlagen, das finale Ergebnisvolumen, also den Computertomographiebilddatensatz, durch eine bildbasierte Kombination dieser beiden Bildvolumina zu ermitteln, indem ein Tiefpassfilter auf das zweite Volumen und ein Hochpassfilter auf das erste Volumen angewendet wird und die jeweiligen Bildvolumina danach addiert werden. Der Hochpassfilter und der Tiefpassfilter sind per Konstruktion so gewählt, dass ihre Summe 1 ergibt.

Die Druckschrift US 2016/ 025 381 8 A1 offenbart ein Verfahren zur Verarbeitung von Kegelstrahl-Röntgenprojektionsdaten wobei Bildartefakte in einem sogenannten "short scan image", basierend auf einem Projektionswinkelintervall von 180° + Fächerwinkel, korrigiert werden, indem dieses mit einem Korrekturbild korrigiert wird. Dabei wird das Korrekturbild erhalten, indem ein asymmetrischer Filter auf ein Differenzbild aus einem "short-scan image" und einem "full-scan image", basierend auf einem 360° Projektionswinkelintervall, angewandt wird.

Mithin ist es denkbar, sowohl Kegelstrahlartefakte als auch HU-Wert-Schwankungsartefakte in der Zeitserie zu korrigieren, indem beispielsweise die beiden hier näher beschriebenen Ansätze nacheinander durchgeführt werden, was sich jedoch als aufwändig und teilweise weniger robust erweist.

Der Erfindung liegt daher die Aufgabe zugrunde, eine den Aufwand reduzierende und die Robustheit erhöhende Möglichkeit zur Bildqualitätsverbesserung einer Zeitserie von Computertomographiebilddatensätzen sowohl hinsichtlich von HU-Wert-Schwankungen über die Zeitserie als auch bezüglich wenigstens einer Artefaktart, die durch Modellierung des Aufnahmevorgangs und der Rekonstruktion abgeschätzt wird, bereitzustellen.

Zur Lösung dieser Aufgabe sind erfindungsgemäß ein computerimplementiertes Verfahren, eine Computertomographieeinrichtung, ein Computerprogramm und ein elektronisch lesbarer Datenträger gemäß den unabhängigen Patentansprüchen vorgesehen. Vorteilhafte Ausgestaltungen ergeben sich aus den Unteransprüchen.

Bei einem Verfahren der eingangs genannten Art ist erfindungsgemäß vorgesehen, dass zur Artefaktreduzierung für jeden Computertomographiebilddatensatz:
- ein Zwischendatensatz aus den ersten Projektionsbildern und ein Basisdatensatz aus zweiten, wenigstens ein Winkelintervall von 360° abdeckenden Projektionsbildern der Projektionsbildserie unter Verwendung einer modifizierten Parametrisierung rekonstruiert werden, wobei die modifizierte Parametrisierung eine stärkere Gewichtung niedrigerer Raumfrequenzen eines abgedeckten Raumfrequenzbereichs bezüglich wenigstens einer Richtung als bei der Rekonstruktion des Computertomographiebilddatensatzes bewirkt,
- durch Anwendung eines Korrekturalgorithmus, der zur Artefaktreduzierung hinsichtlich wenigstens einer Artefaktart den Aufnahmevorgang hinsichtlich der ersten Projektionsbilder und die Rekonstruktion modelliert, ein bezüglich der Artefaktart korrigierter Basisdatensatz erzeugt wird, und
- der Computertomographiedatensatz um einen durch Subtraktion des korrigierten Basisdatensatzes von dem Zwischendatensatz ermittelten, Artefakte beschreibenden Korrekturdatensatz korrigiert wird, dadurch gekennzeichnet,
dass der wenigstens auf Kegelstrahlartefakte als Artefaktart bezogene Korrekturalgorithmus umfasst:
- Ermittlung eines erstes Modelldatensatzes durch Vorwärtsprojektion und Rekonstruktion ausgehend von dem Basisdatensatz und bezogen auf die Projektionsgeometrien der ersten Projektionsbilder,
- Ermittlung eines zweiten Modelldatensatzes durch Anwendung eines Tiefpassfilters oder der Identitätsabbildung auf den Basisdatensatz,
- Ermittlung eines Artefaktdatensatzes durch Subtraktion des zweiten Modelldatensatzes von dem ersten Modelldatensatz, und
- Korrektur des Basisdatensatzes durch Subtraktion des Artefaktdatensatzes.

Die Erfindung geht mithin aus von einem Aufnahmevorgang, in dem, beispielsweise über einen durchgängigen Aufnahmezeitraum oder über mehrere Aufnahmezeitabschnitte bei Triggerung und/oder Gating, eine Projektionsbildserie entsteht, die wenigstens eine komplette Rotation der Röntgenquelle um die Rotationsachse betrifft, insbesondere mehrere solche Rotationen, so dass ein Gesamtwinkelintervall von wenigstens als 360° abgedeckt ist. Dabei können die Projektionsbilder entlang einer kreis- oder spiralförmigen Aufnahmetrajektorie und/oder mit einer Dual-Source-Computertomographieeinrichtung aufgenommen werden. Die Projektionsbildserie wird durch Aufnahme und/oder nach der Aufnahme in einem Speichermittel bereitgestellt. Der Ausdruck "größer als 360°" soll hier bedeuten, dass auch zumindest für einige Winkelanteile des vollen Umlaufs von 360° mehr Projektionsbilder vorliegen.

Es wird nun vorgeschlagen, zur Vorbereitung einer Gesamtkorrektur zunächst einen Zwischendatensatz und einen Basisdatensatz zu ermitteln, wobei der Zwischendatensatz wie der Computertomographiebilddatensatz, der zu korrigieren ist, aus den ersten Projektionsbildern rekonstruiert wird, jedoch mit einer modifizierten Parametrisierung, die eine stärkere Gewichtung niedrigerer Raumfrequenzen des abgedeckten Raumfrequenzbereichs bezüglich wenigstens einer Richtung bewirkt. Das bedeutet, der Zwischendatensatz betrifft die Anteile niedriger Raumfrequenzen. Dies gilt auch für den Basisdatensatz, für den ein Winkelintervall von 360° abdeckende, zweite Projektionsbilder der Projektionsbildserie herangezogen werden. Hierfür wird ebenfalls die gegenüber der Rekonstruktion des Computertomographiebilddatensatzes modifizierte Parametrisierung verwendet, so dass auch dieser nur die Anteile niedriger Raumfrequenz betrifft, mithin potentielle Bewegungsartefakte aufgrund der geringeren Zeitauflösung unterdrückt werden. Allgemein kann also gesagt werden, dass die modifizierte Parametrisierung bis auf die Gewichtung der Parametrisierung zur Ermittlung des Computertomographiebilddatensatzes entsprechen kann.

Dabei sei an dieser Stelle noch angemerkt, dass als Rekonstruktionsalgorithmus für die verschiedenen Rekonstruktionsvorgänge im Rahmen des erfindungsgemäßen Verfahrens bevorzugt ein Algorithmus der gefilterten Rückprojektion (FBP-Algorithmus) verwendet werden kann. Was die Modellierung der Rekonstruktion in dem Korrekturalgorithmus angeht, ist es sowohl denkbar, die modifiziert Parametrisierung zu verwenden, als auch die ursprüngliche Parametrisierung (zur Rekonstruktion des Computertomographiebilddatensatzes) zu verwenden. Insbesondere sind die Projektionsbilder zweidimensional, so dass ein dreidimensionaler Computertomographiebilddatensatz (sowie Zwischendatensatz und Basisdatensatz) rekonstruiert wird.

Die der Erfindung zugrunde liegende Idee ist es, die jeweilig adressierten Artefaktprobleme, die über den Korrekturalgorithmus angesprochen werden sowie die Stabilität der HU-Werte über die Zeitserie betreffen, in einem einzigen Korrekturschritt zu behandeln. Das bedeutet, der ermittelte Korrekturdatensatz beschreibt sowohl Artefakte der wenigstens einen Artefaktart, erfindungsgemäß wenigstens Kegelstrahlartefakte, als auch die HU-Wertstabilität betreffende Artefakte. Anders gesagt betrifft der Korrekturdatensatz beide Artefakteigenschaften und korrigiert somit beide Effekte. Dies wird dadurch erreicht, dass die Rekonstruktion des initialen Eingangsdatensatzes für den Korrekturalgorithmus angepasst wird, und zwar zu einer Projektionsgewichtung auf 360°, so dass innerhalb des Korrekturalgorithmus alle Datensätze die Eigenschaft haben, dass die HU-Werte stabil sind. Insbesondere dann, wenn der Korrekturalgorithmus bestimmte Eigenschaften herausarbeitet bzw. betont und analysiert, wird damit nicht nur eine deutlich weniger komplexe aufwandsärmere Umsetzung beider Korrekturen erlaubt, sondern zudem die Robustheit des Vorgehens deutlich erhöht, da nicht mit einer zu geringen Datenbasis gearbeitet wird, sondern diese zumindest für die wenigstens eine Artefaktart, d.h. wenigstens Kegelstrahlartefakte, bezüglich des Umlaufs vollständig ausgenutzt wird. Der Erhalt der Zeitauflösung wird bei der vorliegenden Erfindung dadurch erreicht, dass eine Differenz zu dem Zwischendatensatz gebildet wird, welcher, wie erläutert, per aktiver Konstruktion niederfrequent ist, beispielsweise basierend auf einem sehr weichen Kernel erzeugt wird.

Die Modellierung sowohl des Aufnahmevorgangs als auch der Rekonstruktion findet im Korrekturalgorithmus weiterhin auf Basis der ersten Projektionsbilder, mithin von deren Projektionsgeometrien, statt. Dabei wird ein Korrekturalgorithmus herangezogen, der die HU-Schwankungen gerade nicht abbildet, mithin den Basisdatensatz um die wenigstens eine Artefaktart, d.h. wenigstens Kegelstrahlartefakte, korrigiert, nicht jedoch die HU-Instabilität innerhalb der Zeitreihe einführt. Anders gesagt behält der Basisdatensatz die korrekten HU-Werte, die sich stabil bei einer 360°-Rekonstruktion ergäben, bei. Dafür existieren mehrere, insbesondere auch wenigstens teilweise gezielt herbeiführbare Gründe. Zum einen kann vorgesehen sein, dass die Modellierung der Aufnahme und der Rekonstruktion wenigstens einen zu Schwankungen der HU-Werte innerhalb der Zeitreihe führenden Aspekt nicht abbildet. In einem bevorzugten Ausführungsbeispiel findet die Modellierung ohne Berücksichtigung von Streustrahlungseffekten statt. Ferner wird ausgenutzt, dass die Modellierung im Rahmen der vorliegenden Erfindung grundsätzlich nur das Teilwinkelintervall "sieht" und letztlich somit auf einer unvollständigen Datenbasis beruht, wobei ja insbesondere das Teilwinkelintervall 180° betragen kann. Dies führt allgemein gesagt dazu, dass bei geometrischen Effekten, die zu HU-Unsicherheiten über die Zeitserie bei unterschiedlichen Teilwinkelintervallen führen, sich diese Unsicherheit bei bestehender Grundlage, also dem Basisdatensatz, nicht in einem willkürlichen Wert, sondern, wie Experimente gezeigt haben, in der Aufrechterhaltung der - aufgrund der 360°-Rekonstruktion ja korrekten - Vorgabe äußern. Hierzu kommt - geht man davon aus, dass der Basisdatensatz im Prinzip der Summe eines auf das Teilwinkelintervall bezogenen Datensatzes und eines Korrekturanteils zur Korrektur von HU-Schwankungen entspricht - dass die Korrektur als deutlich kleiner als die korrigierten Werte anzusehen ist, so dass der Einfluss des Korrekturvorgangs des Korrekturalgorithmus auf den Korrekturanteil ebenso kleiner wäre.

Zusammenfassend ist es also basierend auf der beschriebenen Methode möglich, in nur einem Korrekturschritt zwei unterschiedliche Arten von Artefakten gleichzeitig zu korrigieren. Dies ist in Bezug auf die Gesamtperformance eines Bildaufbereitungssystems, insbesondere bereits in einer Computertomographieeinrichtung selbst, von Vorteil, da eine komplette Rekonstruktion und die anschließende Verrechnung der Volumina eingespart werden. Darüber hinaus nimmt die Komplexität der Rekonstruktions-Pipeline deutlich ab, da eine gesonderte Behandlung von Quickscan-Rekonstruktionen nicht nötig ist. Schließlich kann auch eine verbesserte Robustheit erreicht werden, da der Korrekturalgorithmus auf einer vollständigeren Datenbasis arbeitet.

Dabei sei an dieser Stelle noch darauf hingewiesen, dass sich die höhere Gewichtung niedrigerer Raumfrequenzen für den Zwischendatensatz und den Basisdatensatz besonders bevorzugt wenigstens auf die Rotationsebene (üblicherweise x-y-Ebene) bezieht, sich optional jedoch auch zusätzlich auf die Richtung der Rotationsachse (z-Richtung) beziehen kann. Dies ist im Wesentlichen abhängig davon, welche Artefaktart der Korrekturalgorithmus korrigieren soll. Werden als Kegelstrahlartefakte beispielsweise, worauf noch genauer eingegangen werden wird, Windmühlenartefakte betrachtet, sind starke Kontrastkanten, insbesondere deren Anteile senkrecht zur z-Richtung, relevant und werden gegebenenfalls detektiert, so dass es dann zweckmäßig sein kann, in der z-Richtung weiterhin auch hohe Raumfrequenzen stärker gewichtet zu belassen.

Dabei zielt das vorliegende Verfahren hauptsächlich auf eine Kombination der Korrektur von Kegelstrahlartefakten und HU-Schwankungen über die Zeitserie ab. Erfindungsgemäß ist vorgesehen, dass der wenigstens auf Kegelstrahlartefakte als Artefaktart bezogene Korrekturalgorithmus umfasst:
- Ermittlung eines erstes Modelldatensatzes durch Vorwärtsprojektion und Rekonstruktion ausgehend von dem Basisdatensatz und bezogen auf die Projektionsgeometrien der ersten Projektionsbilder,
- Ermittlung eines zweiten Modelldatensatzes durch Anwendung eines Tiefpassfilters oder der Identitätsabbildung auf den Basisdatensatz,
- Ermittlung eines Artefaktdatensatzes durch Subtraktion des zweiten Modelldatensatzes von dem ersten Modelldatensatz, und
- Korrektur des Basisdatensatzes durch Subtraktion des Artefaktdatensatzes.

Bei dieser Herangehensweise wird also davon ausgegangen, dass Vorwärtsprojektion, gefolgt von einer Rekonstruktion, als die Summe einer Tiefpassfilterung und eines linearen Operators, der Artefakte auslöst, verstanden werden kann, wobei diese Artefakte bevorzugt neben typischen Kegelstrahlartefakten, insbesondere Windmühlenartefakten, auch weitere Artefaktarten umfassen kann, beispielsweise Streifenartefakte. Die Tiefpassfilterung wird dabei letztlich von der Interpolation bei der Vorwärtsprojektion und der Rückprojektion ausgelöst. Soll diese ebenso als Artefakt verstanden werden, kann hier auch die Identitätsabbildung herangezogen werden. Zur Vorwärtsprojektion können dabei grundsätzlich im Stand der Technik bekannte Varianten herangezogen werden, wobei lediglich stellvertretend auf die im eingangs bereits genannten Artikel von Johan Sunnegaardh et al. genannten Möglichkeiten verwiesen wird. Die Rekonstruktion entspricht insbesondere, wie bereits dargelegt, der auch für den Computertomographiebilddatensatz herangezogenen Rekonstruktion.

Ein solcher Korrekturalgorithmus wird mit besonderem Vorteil iterativ durchgeführt, um eine schrittweise Verbesserung hinsichtlich der Artefakte zu erreichen. Das bedeutet, der in einem Iterationsschritt erhaltene korrigierte Basisdatensatz dient als neuer zu korrigierender Basisdatensatz für den nächsten Iterationsschritt.

Mit besonderem Vorteil kann vor Ermittlung der Korrekturdatensätze ein artefaktverursachende Strukturen hervorhebender und/oder rekonstruierender und/oder auswählender Bildverarbeitungsoperator auf den Basisdatensatz angewendet werden. Ein solcher Bildverarbeitungsoperator ist beispielsweise der in dem bereits zitierten Artikel von Johan Sunnegaardh et al. beschriebene Kantenrückgewinnungsoperator. Mit anderen Worten bedeutet dies, dass als artefaktverursachende Strukturen wenigstens Kanten, deren Normalenvektor eine insbesondere einen Schwellwert übersteigende Komponente in Richtung der Rotationsachse aufweist, verwendet werden. Die Richtung der Rotationsachse wird dabei üblicherweise als z-Richtung bezeichnet. Wie bereits erläutert wurde, kann in diesem Fall die stärkere Gewichtung niedrigerer Raumfrequenzen auf die x-Richtung und die y-Richtung (Rotationsebene) beschränkt werden, um die starken Kontrastkanten in z-Richtung möglichst gut für den Korrekturalgorithmus und den Bildverarbeitungsoperator zu erhalten.

Insbesondere bei Verwendung der gefilterten Rückprojektion zur Rekonstruktion wird üblicherweise ein Rekonstruktionskern von einem Benutzer ausgewählt, der aufgrund seiner Parametrisierung bestimmte Bildeigenschaften im Rekonstruktionsergebnis hervorruft. In diesem Zusammenhang kann in einer konkreten Ausgestaltung der vorliegenden Erfindung vorgesehen sein, dass zur Modifizierung der Parametrisierung ein insbesondere nutzerseitig ausgewählter Rekonstruktionskern mittels einer Modifikationsfunktion, die die stärkere Gewichtung niedrigerer Raumfrequenzen beschreibt, modifiziert wird. Rekonstruktionskerne haben bereits bestimmte Filtereigenschaften hinsichtlich der Raumfrequenzen, welche beispielsweise durch eine Spektralverteilungsfunktion beschrieben sein können. Eine ebenso im Frequenzraum definierte Modifikationsfunktion könnte beispielsweise eine auf eins normierte, niedrige Raumfrequenzen stärker betonende, multiplikativ hinzufügbare Spektralverteilungsfunktion sein.

Eine besonders zweckmäßige Weiterbildung der vorliegenden Erfindung sieht vor, dass vor der Ermittlung des Basisdatensatzes und des Zwischendatensatzes die Auflösung der Projektionsbilder reduziert wird und die Auflösung des Korrekturdatensatzes vor seiner Anwendung wieder auf die Auflösung des Computertomographiebilddatensatzes hochgerechnet wird. Das bedeutet, vor Ermittlung des Korrekturdatensatzes kann ein Downsampling durchgeführt werden, um die Datenmenge, die zu verarbeiten ist, zu reduzieren und gleichzeitig weiter die Unterdrückung zu hoher Raumfrequenzen zu begünstigen, nachdem äußerst feine Strukturen sozusagen "verwischt" werden. Auf diese Weise wird der Umsetzungs- und Rechenaufwand weiter reduziert.

Ein hauptsächliches Anwendungsgebiet, in dem die vorliegende Erfindung eingesetzt werden kann, ist die Bildgebung des Herzens, beispielsweise die Koronarangiographie. Mithin kann sich auch die vorliegende Erfindung auf ein derartiges Anwendungsgebiet beziehen. Mit anderen Worten bedeutet dies, dass vorgesehen sein kann, dass der Aufnahmebereich das Herz eines Patienten umfasst, wobei die ersten Projektionsbilder zeitlich auf ein Auftreten einer bestimmten Bewegungsphase im Herzzyklus bezogen sind. Dabei können selbstverständlich auch mehrere Bewegungsphasen betrachtet werden, wobei jedoch häufig eine bestimmte Bewegungsphase ausgewählt wird, beispielsweise die Phase geringer Bewegung nach der R-Zacke, und dann verschiedene Computertomographiebilddatensätze der Zeitserie, die dieselbe Bewegungsphase zu unterschiedlichen Zeitintervallen betreffen, zu generieren, beispielsweise um eine Kontrastmittelanflutung und/oder ein Kontrastmittelablauf beobachten zu können. In diesem Zusammenhang kann vorgesehen sein, dass die zweiten Projektionsbilder aus mehreren zeitlich versetzten Auftreten der bestimmten Bewegungsphase zusammengestellt werden. Das bedeutet, um die zweiten Projektionsbilder für den Basisdatensatz zu erhalten, können durchaus - neben einer simplen Erweiterung des Teilwinkelintervalls unter Aufnahme weiterer Bewegungsphasen bzw. deren Anteile zur Vervollständigung auf 360° - Projektionsbilder aus anderen, getrennten Zeitintervallen, zu denen die Bewegungsphase früher oder später auftrat, herangezogen werden. Trat die Bewegungsphase beispielsweise einmal in einem Teilwinkelintervall, bezogen auf die 360° eines Gesamtumlaufs, von 0 bis 180°, ein weiteres Mal in einem Teilwinkelintervall von 60 bis 240°und ein drittes Mal in einem Teilwinkelintervall von 200 bis 20° auf, können zweite Projektionsbilder, die komplette 360° abdecken, zusammengestellt werden, die allesamt die bestimmte Bewegungsphase betreffen. Hierbei kann es durchaus auch denkbar sein, bestimmte Unterwinkelintervalle bzw. Projektionswinkel mehrfach abzudecken, so dass dann letztlich ein Winkelbereich größer als 360° abgedeckt wäre. Neben dem Verfahren betrifft die vorliegende Erfindung auch eine Computertomographieeinrichtung, aufweisend, neben einer Aufnahmeanordnung mit einer Röntgenquelle und einem Röntgendetektor, wobei wenigstens die Röntgenquelle innerhalb einer Gantry rotierbar gelagert sein kann, eine zur Durchführung des erfindungsgemäßen Verfahrens ausgebildete Steuereinrichtung. Sämtliche Ausführungen bezüglich des erfindungsgemäßen Verfahrens lassen sich analog auf die erfindungsgemäße Computertomographieeinrichtung übertragen, so dass auch mit dieser die bereits genannten Vorteile erhalten werden können.

Die Steuereinrichtung kann wenigstens einen Prozessor und wenigstens ein Speichermittel umfassen und durch Hardware und/oder Software Funktionseinheiten bilden, um Schritte des erfindungsgemäßen Verfahrens durchzuführen und/oder weitere Steueraufgaben wahrnehmen zu können. Insbesondere kann die Steuereinrichtung auch eine Aufnahmeeinheit zur Ansteuerung der Aufnahmeanordnung zur Durchführung des Aufnahmevorgangs für die Projektionsbilderserie (sowie weitere Aufnahmeprozesse) aufweisen. Hinsichtlich der vorliegenden Erfindung kann die Steuereinrichtung mit besonderem Vorteil eine Rekonstruktionseinheit zur Rekonstruktion des Computertomographiebilddatensatzes sowie des Zwischendatensatzes und des Basisdatensatzes, eine erste Korrektureinheit zur Anwendung des Korrekturalgorithmus auf den Basisdatensatz und eine zweite Korrektureinheit zur Ermittlung des Korrekturdatensatzes und zu dessen Anwendung aufweisen. Selbstverständlich können auch weitere Funktionseinheiten für weitere Schritte bereitgestellt werden.

Ein erfindungsgemäßes Computerprogramm ist direkt in ein Speichermittel einer Recheneinrichtung, insbesondere einer Steuereinrichtung einer Computertomographieeinrichtung, ladbar und weist Programmmittel auf, um die Schritte eines erfindungsgemäßen Verfahrens durchzuführen, wenn das Computerprogramm auf der Recheneinrichtung ausgeführt wird. Das Computerprogramm kann auf einem erfindungsgemäßen elektronisch lesbaren Datenträger gespeichert sein, der mithin darauf gespeicherte Steuerinformationen umfasst, die wenigstens ein erfindungsgemäßes Computerprogramm umfassen und bei Verwendung des Datenträgers in einer Recheneinrichtung, insbesondere einer Steuereinrichtung einer Computertomographieeinrichtung, diese ausgestalten und/oder veranlassen, die Schritte eines erfindungsgemäßen Verfahrens durchzuführen. Bei dem Datenträger kann es sich insbesondere um einen nichttransienten Datenträger, beispielsweise eine CD-ROM, handeln.

Es sei an dieser Stelle noch angemerkt, dass die Projektionsbilder der Projektionsbildserie selbstverständlich auch getriggert bzw. gegated aufgenommen werden können. Beispielsweise kann eine EKG-Messung an dem Patienten, bei dem in einem das Herz umfassenden Aufnahmebereich Projektionsbilder aufgenommen werden sollen, erfolgen, so dass beispielsweise nur Projektionsbilder einer bestimmten Bewegungsphase des Herzzyklus aufgenommen werden bzw. gezielt ausgewählt werden. In solchen Fällen liegen meist Teilserien bestimmter Zeit und somit auch Teilwinkelintervalle vor, die sich jedoch vorliegend zweckmäßigerweise so ergänzen können, dass die vollen 360° abgedeckt werde. Mit anderen Worten ergibt sich in einer solchen Konstellation die Möglichkeit, dass die wenigstens 360° umfassenden zweiten Projektionsbilder alle derselben, insbesondere bestimmten, Bewegungsphase des Herzzyklus entsprechen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: Verläufe von HU-Werten über eine Zeitserie,
- Fig. 3: eine erfindungsgemäße Computertomographieeinrichtung, und
- Fig. 4: die funktionale Struktur einer Steuereinrichtung der Computertomographieeinrichtung.

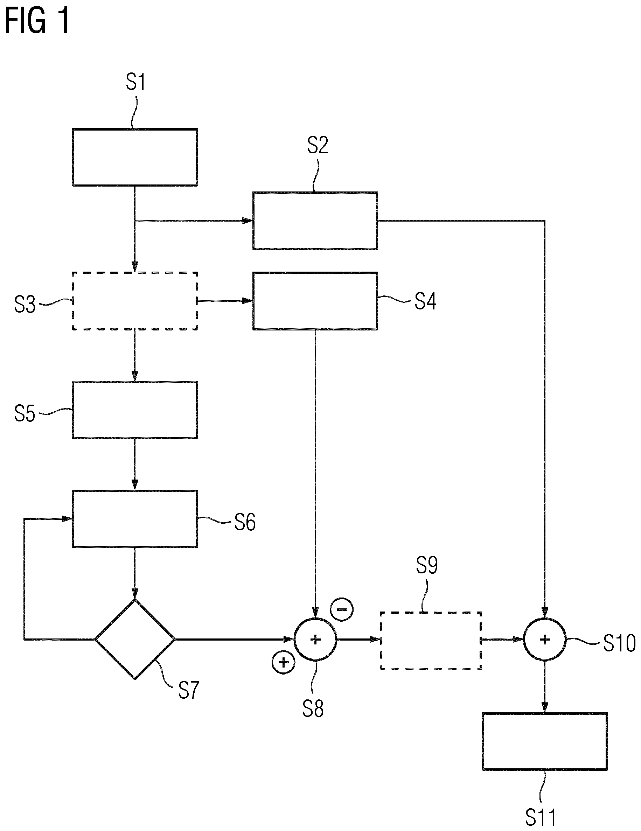

Fig. 1 zeigt einen Ablaufplan eines Ausführungsbeispiels des erfindungsgemäßen Verfahrens. Dabei sollen vorliegend aus einem das Herz umfassenden Aufnahmebereich dreidimensionale Computertomographiebilddatensätze ermittelt werden, insbesondere eine Zeitreihe, die sich auf wenigstens eine bestimmte Herzphase bezieht.

Hierzu wird in einem Schritt S1, vorliegend durch Aufnahme mit einer Computertomographieeinrichtung, eine Projektionsbildserie zweidimensionaler Projektionsbilder des Aufnahmebereichs bereitgestellt. Dabei wird vorliegend davon ausgegangen, dass die bestimmte Herzphase für jeden Umlauf der Röntgenquelle der Computertomographieeinrichtung entlang ihrer Aufnahmetrajektorie nur für ein Teilwinkelintervall, das weniger als 360° umfasst, vorliegt. Um dennoch eine hohe Zeitauflösung zu erhalten, sollen vorliegend, trotzdem keine 360°-Abdeckung verwendet werden kann, Computertomographiebilddatensätze in einem Schritt S2 aus solchen Teilwinkelbereichen rekonstruiert werden, beispielsweise aus einem Teilwinkelintervall, das 180° umfasst. Allerdings liegen die Teilwinkelintervalle für die bestimmte Bewegungsphase dann dennoch im Allgemeinen für jeden für ein Teilwinkelintervall, in dem die entsprechenden ersten Projektionsbilder aufeinander folgend aufgenommen wurden, zu ermittelnden Computertomographiebilddatensatz unterschiedlich, so dass beispielsweise für einen Computertomographiebilddatensatz das Teilwinkelintervall bei 40 bis 220° liegt, für einen anderen bei 140 bis 320°. Dies führt im Vergleich zu vollständigen, wenigstens ein Winkelintervall von 360° abdeckenden Rekonstruktionen zu Schwankungen der HU-Werte innerhalb der Zeitreihe von Computertomographiebilddatensätzen und kann als HU-Schwankungsartefakte bezeichnet werden.

Im Rahmen der vorliegenden Erfindung sollen diese HU-Schwankungsartefakte genau wie Artefakte wenigstens einer anderen Artefaktart, d.h. erfindungsgemäß wenigstens Kegelstrahlartefakte, auf möglichst einfach umzusetzende, aufwandsarme und robuste Art und Weise korrigiert werden. Hierzu ist nach der Rekonstruktion eines Computertomographiebilddatensatzes im Schritt S2 zunächst ein optionaler Schritt S3 vorgesehen, in dem ein Downsampling, also eine Reduzierung der räumlichen Auflösung, erfolgen kann. Dies kann die folgenden Berechnungen vereinfachen und in ihrem Aufwand reduzieren, ist jedoch nicht zwangsläufig notwendig.

In jedem Fall werden in einem Schritt S4 ein Zwischendatensatz und in einem Schritt S5 ein Basisdatensatz für das weitere Vorgehen rekonstruiert, wobei für den Zwischendatensatz wiederum die ersten Projektionsbilder, die auch der Rekonstruktion des zu korrigierenden Computertomographiebilddatensatzes zugrunde lagen, verwendet werden, allerdings, nachdem im vorliegenden Ausführungsbeispiel die gefilterte Rückprojektion zur Rekonstruktion verwendet wird, mit einem weicheren Rekonstruktionskern. Allgemein formuliert bedeutet das, dass eine gegenüber der Rekonstruktion im Schritt S2 modifizierte Parametrisierung verwendet wird, bei der niedrige Raumfrequenzen des abgedeckten Raumfrequenzbereichs zumindest bezüglich der Rotationsebene, also der x-Richtung und der y-Richtung, stärker gewichtet werden. Diese Beschränkung auf die x- und die y-Richtung liegt im vorliegenden Ausführungsbeispiel darin begründet, dass die folgenden Korrekturschritte insbesondere auch Windmühlen-Artefakte betrachten soll, welche durch Kanten senkrecht zur Richtung der Rotationsachse, also der z-Richtung, entstehen, diese Kanten mithin auch gut aufgelöst bzw. rückgewinnbar bleiben sollen. Es sind jedoch auch Ausführungsbeispiele denkbar, in denen sich die höhere Gewichtung niedrigerer Raumfrequenzen auf alle drei Raumrichtungen bezieht. Zur Ermittlung der modifizierten Parametrierung kann beispielsweise eine Benutzervorgabe, einer bestimmten Modifizierungsfunktion folgend, modifiziert werden, beispielsweise durch Multiplikation der Spektralverteilungsfunktion eines benutzergewählten Kerns mit einer als auf eins normierte Spektralverteilungsfunktion ausgebildeten Modifizierungsfunktion.

Zur Rekonstruktion des Basisdatensatzes im Schritt S5 wird dieselbe modifizierte Parametrisierung verwendet, jedoch werden zweite Projektionsbilder, die wenigstens die vollen 360° abdecken, herangezogen, gegebenenfalls auch unter Hinzunahme von Projektionsbildern der Projektionsbildserie aus weiteren Auftreten der bestimmten Bewegungsphase. Sollten zu bestimmten Winkelintervallen keine Projektionsbilder der bestimmten Bewegungsphase vorliegen, können auch Projektionsbilder anderer, insbesondere nahe im Herzzyklus liegender, Bewegungsphasen verwendet werden, um volle 360° zu erreichen.

Das bedeutet, der Basisdatensatz beruht hinsichtlich der HU-Schwankungsartefakte auf einer vollständigen Basis. Damit bietet er eine robuste Grundlage für den nun in den Schritten S6 und S7 iterativ durchgeführten Korrekturalgorithmus für Kegelstrahlartefakte als Artefaktart. Dabei wird vorliegend in jedem Iterationsschritt S6 zunächst ein Kantenrückgewinnungsoperator als Bildverarbeitungsoperator auf den Basisdatensatz angewandt, um Kanten, deren Normalenvektor eine insbesondere einen Schwellwert überschreitende Komponente in z-Richtung, also Richtung der Rotationsachse, aufweist, hervorzuheben bzw. zurückzugewinnen. Dabei kann beispielsweise die in dem eingangs genannten Artikel von Johan Sunnegaardh et al. zitierte Ausgestaltung verwendet werden. Auf Basis des so bearbeiteten Basisdatensatzes erfolgt dann zum einen Tiefpassfilterung, zum anderen eine Vorwärtsprojektion gefolgt von einer Rekonstruktion, hier wiederum mit der modifizierten Parametrisierung, jedoch bezogen auf die Projektionsgeometrien der ersten Projektionsbilder. Das bedeutet, der iterative Korrekturschritt basiert in seiner Modellierung des Aufnahmevorgangs und der Rekonstruktion auf dem eingeschränkten Teilwinkelintervall, wobei zudem in diesem Fall auch keine Streustrahlung modelliert wird. Dies führt, wie sich gezeigt hat, dazu, dass keine HU-Schwankungsartefakte eingeführt werden, sondern die korrekten HU-Werte der vollständigen Rekonstruktion im Schritt S5 erhalten bleiben. Gleichzeitig werden auf robuste und verlässliche Art und Weise Kegelstrahlartefakte ermittelt und korrigiert, so dass bei Erfüllung der Abbruchbedingung für die iterative Korrektur im Schritt S7 ein korrigierter Basisdatensatz zur Verfügung steht, von dem im Schritt S8 durch Abziehen des Zwischendatensatzes der (hier negative) Korrekturdatensatz bestimmt werden kann, der nicht nur die zu korrigierenden Kegelstrahlartefakte (sowie gegebenenfalls weitere, betrachtete Artefakte anderer Artefaktarten) beschreibt, sondern auch die HU-Schwankungen, so dass, nach der optionalen Wiederherstellung der räumlichen Auflösung im Schritt S9 (Upsampling), falls im Schritt S3 ein Downsampling erfolgte, in einem Schritt S10 der (hier negative) Korrekturdatensatz additiv auf den zu korrigierenden Computertomographiebilddatensatz des Schrittes S2 angewendet werden kann, um in einem Schritt S11 einen korrigierten Computertomographiebilddatensatz bereitstellen zu können. Selbstverständlich ist es alternativ genauso denkbar, im Schritt S8 den Korrekturdatensatz positiv zu bestimmen, indem der korrigierte Basisdatensatz von dem Zwischendatensatz abgezogen wird, um den Korrekturdatensatz dann im Schritt S10 von dem zu korrigierenden Computertomographiebilddatensatz abzuziehen.

Das beschriebene Vorgehen gemäß Fig. 1 kann auf jeden Computertomographiebilddatensatz der Zeitreihe angewandt werden.

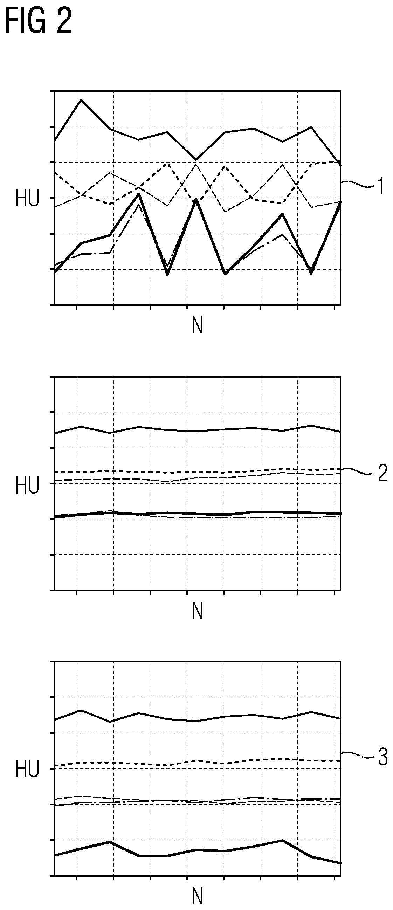

Fig. 2 zeigt in diesem Zusammenhang zunächst im ersten Teilbild 1 HU-Werte in Computertomographiebilddatensätzen einer Zeitreihe für verschiedene Raumpunkte. Ersichtlich treten starke Schwankungen auf, also die genannten HU-Schwankungsartefakte vor der hier beschriebenen Korrektur. Das Teilbild 2 zeigt zum Vergleich HU-Wertverläufe über eine Zeitreihe von vollständigen, jeweils auf wenigstens 360° abdeckenden Projektionsbildern basierenden Rekonstruktionen. Ersichtlich treten deutlich weniger Schwankungen auf. Das dritte Teilbild 3 zeigt schließlich HU-Wertverläufe nach Anwendung des erfindungsgemäßen Verfahrens. Ersichtlich sind die HU-Werte über die Zeitreihe deutlich stabiler und eher vergleichbar mit den Verläufen im Teilbild 2.

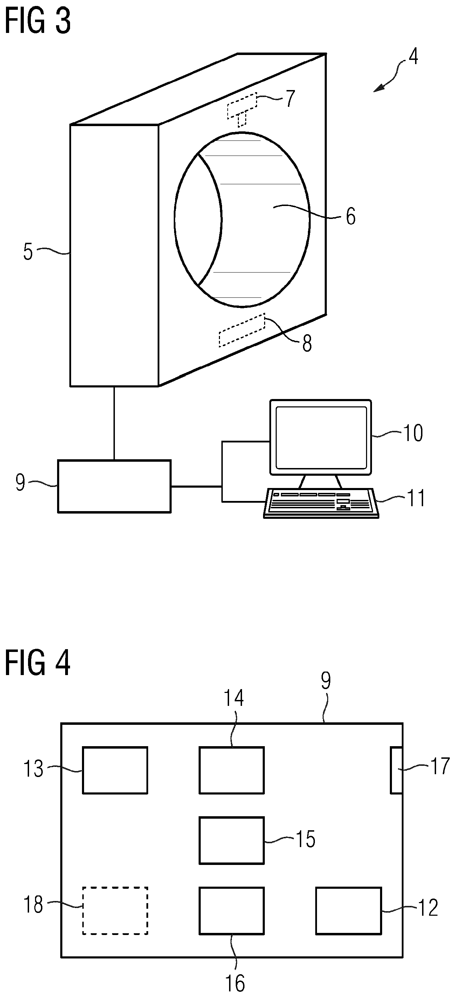

Fig. 3 zeigt eine Prinzipskizze einer erfindungsgemäßen Computertomographieeinrichtung 4. Diese weist eine Gantry 5 mit einer Patientenöffnung 6 auf, in die mittels einer hier nicht gezeigten Patientenliege der Aufnahmebereich eines Patienten eingefahren werden kann. Zur Realisierung von Spiraltrajektorien als Aufnahmetrajektorie kann auch eine Bewegung der Patientenliege während des Aufnahmevorgangs erfolgen.

In der Gantry 5 ist eine Aufnahmeanordnung mit einer Röntgenquelle 7 und einem gegenüberliegenden Röntgendetektor 8 rotierbar um die Längsachse der Patientenöffnung 6, die der Rotationsachse entspricht, gelagert, so dass verschiedene Projektionswinkel in der zur Rotationsachse senkrechten x-y-Ebene eingenommen werden können.

Der Betrieb der Computertomographieeinrichtung 4 wird durch eine Steuereinrichtung 9 gesteuert, an welcher auch eine Anzeigeeinrichtung 10 und eine Eingabeeinrichtung 11 angeschlossen sind.

Fig. 4 zeigt die funktionale Struktur der Steuereinrichtung 9 genauer. Diese weist zunächst ein Speichermittel 12 auf, um beispielsweise Parametrisierungen, rekonstruierte Datensätze und dergleichen zwischen- oder dauerspeichern zu können. Neben einer Aufnahmeeinheit 13 zur Steuerung des Aufnahmebetriebs mit der Aufnahmeanordnung weist die Steuereinrichtung 9 vorliegend auch eine Rekonstruktionseinheit 14 zur Rekonstruktion der Computertomographiebilddatensätze im Schritt S2, der Zwischendatensätze im Schritt S4 und der Basisdatensätze im Schritt S5 auf. Die Rekonstruktionseinheit 14 kann auch die Modellierung der Rekonstruktion im Schritt S6 durchführen.

In einer ersten Korrektureinheit 15 wird der Korrekturalgorithmus iterativ durchgeführt, wie bezüglich der Schritte S6 und S7 beschrieben, wonach als Ergebnis gemäß Schritt S8 der Korrekturdatensatz erhalten wird. In einer zweiten Korrektureinheit 16 wird der Korrekturdatensatz gemäß Schritt S10 dann angewandt, um den korrigierten Computertomographiebilddatensatz zu erhalten, welcher dann, beispielsweise mittels einer Schnittstelle 17, gemäß Schritt S11 bereitgestellt werden kann, beispielsweise an der Anzeigeeinrichtung 10 angezeigt werden kann.

Optional kann auch eine Up- und Downsamplingeinheit 18 für die optionalen Schritte S3 und S9 vorgesehen sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Verfahren zur Bildqualitätsverbesserung einer Zeitreihe von Computertomographiebilddatensätzen, wobei
- in einem Aufnahmevorgang mit unterschiedlichen Projektionsgeometrien aufgenommene Projektionsbilder eines Aufnahmebereichs als eine Projektionsbildserie bereitgestellt werden,
- die Projektionsgeometrien wenigstens durch einen Projektionswinkel in einer zu einer Rotationsachse, um die eine Röntgenquelle (7) einer verwendeten Computertomographieeinrichtung (4) entlang einer Aufnahmetrajektorie rotiert, senkrechten Ebene beschrieben sind,
- die Projektionsbilder in dem Aufnahmevorgang in ihren Projektionswinkeln ein Gesamtwinkelintervall von wenigstens 360° abdecken, und
- zur Rekonstruktion der Computertomographiebilddatensätze jeweils zeitlich aufeinanderfolgend aufgenommene erste Projektionsbilder, die in ihren Projektionswinkeln ein Teilwinkelintervall von weniger als 360°, insbesondere von 180° oder weniger, abdecken, der Projektionsbildserie verwendet werden, wobei zur Artefaktreduzierung für jeden Computertomographiebilddatensatz
- ein Zwischendatensatz aus den ersten Projektionsbildern und ein Basisdatensatz aus zweiten, wenigstens ein Winkelintervall von 360° abdeckenden Projektionsbildern der Projektionsbildserie unter Verwendung einer modifizierten Parametrisierung rekonstruiert werden, die eine stärkere Gewichtung niedrigerer Raumfrequenzen eines abgedeckten Raumfrequenzbereichs bezüglich wenigstens einer Richtung als bei der Rekonstruktion des Computertomographiebilddatensatzes bewirkt,
- durch Anwendung eines Korrekturalgorithmus, der zur Artefaktreduzierung hinsichtlich wenigstens einer Artefaktart den Aufnahmevorgang hinsichtlich der ersten Projektionsbilder und die Rekonstruktion modelliert, ein bezüglich der Artefaktart korrigierter Basisdatensatz erzeugt wird, und
- der Computertomographiedatensatz um einen durch Subtraktion des korrigierten Basisdatensatzes von dem Zwischendatensatz ermittelten, Artefakte beschreibenden Korrekturdatensatz korrigiert wird, **dadurch gekennzeichnet,**
**dass** der wenigstens auf Kegelstrahlartefakte als Artefaktart bezogene Korrekturalgorithmus umfasst:
- Ermittlung eines erstes Modelldatensatzes durch Vorwärtsprojektion und Rekonstruktion ausgehend von dem Basisdatensatz und bezogen auf die Projektionsgeometrien der ersten Projektionsbilder,
- Ermittlung eines zweiten Modelldatensatzes durch Anwendung eines Tiefpassfilters oder der Identitätsabbildung auf den Basisdatensatz,
- Ermittlung eines Artefaktdatensatzes durch Subtraktion des zweiten Modelldatensatzes von dem ersten Modelldatensatz, und
- Korrektur des Basisdatensatzes durch Subtraktion des Artefaktdatensatzes.

2. Verfahren nach Anspruch 1, **dadurch gekennzeichnet, dass** der Korrekturalgorithmus iterativ durchgeführt wird.

3. Verfahren nach Anspruch 1 oder 2, **dadurch gekennzeichnet, dass** vor Ermittlung der Korrekturdatensätze ein artefaktverursachende Strukturen hervorhebender und/oder rekonstruierender und/oder auswählender Bildverarbeitungsoperator auf den Basisdatensatz angewendet wird.

4. Verfahren nach Anspruch 3, **dadurch gekennzeichnet, dass** als artefaktverursachende Strukturen wenigstens Kanten, deren Normalenvektor eine insbesondere einen Schwellwert übersteigende Komponente in Richtung der Rotationsachse aufweist, verwendet werden.

5. Verfahren nach einem der vorangehenden Ansprüche, **dadurch gekennzeichnet, dass** zur Modifizierung der Parametrisierung ein insbesondere nutzerseitig ausgewählter Rekonstruktionskern mittels einer Modifikationsfunktion, die die stärkere Gewichtung niedrigerer Raumfrequenzen beschreibt, modifiziert wird.

6. Verfahren nach einem der vorangehenden Ansprüche, **dadurch gekennzeichnet, dass** vor der Ermittlung des Basisdatensatzes und des Zwischendatensatzes die Auflösung der Projektionsbilder reduziert wird und die Auflösung des Korrekturdatensatzes vor seiner Anwendung wieder auf die Auflösung des Computertomographiebilddatensatzes hochgerechnet wird.

7. Verfahren nach einem der vorangehenden Ansprüche, **dadurch gekennzeichnet, dass** der Aufnahmebereich das Herz eines Patienten umfasst, wobei die ersten Projektionsbilder zeitlich auf ein Auftreten einer bestimmten Bewegungsphase im Herzzyklus bezogen sind.

8. Verfahren nach Anspruch 7, **dadurch gekennzeichnet, dass** die zweiten Projektionsbilder aus mehreren zeitlich versetzten Auftreten der bestimmten Bewegungsphase zusammengestellt werden.

9. Computertomographieeinrichtung (4), aufweisend eine zur Durchführung eines Verfahrens nach einem der vorangehenden Ansprüche ausgebildete Steuereinrichtung (9).

10. Computerprogramm, das die Schritte eines Verfahrens nach einem der Ansprüche 1 bis 8 durchführt, wenn es auf einer Recheneinrichtung, insbesondere einer Steuereinrichtung (9) einer Computertomographieeinrichtung (4), ausgeführt wird.

11. Elektronisch lesbarer Datenträger, auf dem ein Computerprogramm nach Anspruch 10 gespeichert ist.

## Claims

1. Computer-implemented method for improving image quality in a time series of computed tomography image data sets, wherein
- projection images of a recording region recorded in a recording procedure with different projection geometries are provided as a projection image series,
- the projection geometries are at least described by a projection angle in a plane which is perpendicular to an axis of rotation, about which an X-ray source (7) of a computed tomography facility (4) used rotates along a recording trajectory,
- the projection images in the recording procedure cover a total angular interval of at least 360° in their projection angles, and
- first projection images of the projection image series recorded in each case consecutively in time are used to reconstruct the computed tomography image data sets, which projection images cover a partial angle interval of less than 360° in their projection angles, in particular of 180° or less, wherein, to reduce artefacts for each computed tomography image data set,
- an interim dataset from the first projection images and a base dataset from second projection images of the projection image series which cover at least an angular interval of 360° are reconstructed using a modified parameterisation, which causes a greater weighting of lower spatial frequencies of a spatial frequency region that is covered in relation to at least one direction than in the case of the reconstruction of the computed tomography image data set,
- a corrected base image data set in relation to the type of artefact is generated by applying a correction algorithm which models the recording procedure with respect to the first projection images and the reconstruction in order to reduce artefacts concerning at least one type of artefact and
- the computed tomography data set is corrected by a correction data set, which describes artefacts and is determined by subtraction of the corrected base image data set from the interim data set, **characterised in that** the correction algorithm relating at least to cone beam artefacts as the type of artefact comprises:
- determining a first model data set by way of forward projection and reconstruction starting from the base data set and relative to the projection geometries of the first projection images,
- determining a second model data set by applying a low-pass filter or mapping the identity to the base data set,
- determining an artefact data set by subtracting the second model data set from the first model data set, and
- correcting the base data set by subtracting the artefact data set.

2. Method according to claim 1, **characterised in that** the correction algorithm is carried out iteratively.

3. Method according to claim 1 or 2, **characterised in that**, prior to determining the correction data set, an image processing operator, which emphasises and/or reconstructs and/or selects structures causing artefacts, is applied to the base data set.

4. Method according to claim 3, **characterised in that** at least edges, the normal vector of which has a component which in particular exceeds a threshold in the direction of the axis of rotation, are used as structures which cause artefacts.

5. Method according to one of the preceding claims, **characterised in that**, for modifying the parameterisation, a reconstruction kernel selected in particular by a user is modified by means of a modification function which describes the greater weighting of lower spatial frequencies.

6. Method according to one of the preceding claims, **characterised in that**, prior to determining the base data set and the interim data set, the resolution of the projection images is reduced and, prior to application of the correction data set, its resolution is extrapolated again to the resolution of the computed tomography image data set.

7. Method according to one of the preceding claims, **characterised in that** the recording region comprises the heart of a patient, wherein the first projection images temporally relate to an occurrence of a particular movement phase in the cardiac cycle.

8. Method according to claim 7, **characterised in that** the second projection images are compiled from a number of temporally offset occurrences of the particular movement phase.

9. Computed tomography facility (4), having a control facility (9) designed to carry out a method according to one of the preceding claims.

10. Computer program which carries out the steps of a method according to one of claims 1 to 8 when it is executed on a computer facility, in particular a control facility (9) of a computed tomography facility (4).

11. Electronically readable data carrier, on which a computer program according to claim 10 is stored.

## Revendications

1. Procédé mis en œuvre par ordinateur d'amélioration de la qualité de l'image d'une série temporelle d'ensembles de données d'image de tomodensitométrie assistée par ordinateur, dans lequel
- on se procure, sous la forme d'une série d'images de projection, des images de projection d'une partie d'enregistrement enregistrées dans une opération d'enregistrement avec des géométries de projection différentes,
- les géométries de projection sont décrites au moins par un angle de projection dans un plan perpendiculaire à un axe de rotation, autour duquel une source (7) de rayons X d'un dispositif (4) utilisé de tomodensitométrie assistée par ordinateur tourne suivant une trajectoire d'enregistrement,
- les images de projection recouvrent, dans l'opération d'enregistrement, dans leurs angles de projection, un intervalle angulaire d'ensemble d'au moins 360°, et
- pour la reconstruction des ensembles de données d'image de tomodensitométrie assistée par ordinateur, on utilise respectivement des premières images de projection, enregistrées successivement dans le temps, qui recouvrent, dans leurs angles de projection, un intervalle angulaire partiel de moins de 360°, en particulier de 180° ou moins, de la série d'images de projection, dans lequel, pour la réduction des artefacts, pour chaque ensemble de données d'image de tomodensitométrie assistée par ordinateur,
- on reconstruit un ensemble de données intermédiaire à partir des premières images de projection et un ensemble de données de base à partir de deuxièmes images de projection, recouvrant au moins un intervalle angulaire de 360°, de la série d'images de projection, en utilisant un paramétrage modifié, qui provoque une pondération plus forte de basses fréquences spatiales d'un domaine de fréquences spatial recouvert, rapporté à au moins une direction, que lors de la reconstruction de données d'image de tomodensitométrie assistée par ordinateur,
- par application d'un algorithme de correction qui, pour la réduction d'artefacts en ce qui concerne au moins un type d'artefact, modélise l'opération d'enregistrement en ce qui concerne les premières images de projection et la reconstruction, on produit un ensemble de données de base corrigé rapporté au type d'artefact, et
- on corrige l'ensemble de données de tomodensitométrie assistée par ordinateur d'un ensemble de données de correction décrivant des artefacts, déterminé par soustraction de l'ensemble de données de base corrigé de l'ensemble des données intermédiaire, **caractérisé**
**en ce que** le au moins un algorithme de correction, rapporté comme type d'artefact, à des artefacts de rayonnement conique, comprend :
- détermination d'un premier ensemble de données de modèle par projection vers l'avant et reconstruction à partir de l'ensemble de données de base et rapporté aux géométries de projection des premières images de projection,
- détermination d'un deuxième ensemble de données de modèle par utilisation d'un filtre passe bas ou de la reproduction d'identité sur l'ensemble de données de base,
- détermination d'un ensemble de données d'artefact par soustraction du deuxième ensemble de données de modèle du premier ensemble de données de modèle, et
- correction de l'ensemble de données de base par soustraction de l'ensemble de données d'artefact.

2. Procédé suivant la revendication 1, **caractérisé en ce que** l'on effectue itérativement l'algorithme de correction.

3. Procédé suivant la revendication 1 ou 2, **caractérisé en ce que**, avant la détermination des ensembles de données de correction, on applique, à l'ensemble de données de base, un opérateur de traitement d'image faisant ressortir et/ou reconstruisant et/ou sélectionnant des structures provoquant un artefact.

4. Procédé suivant la revendication 3, **caractérisé en ce que**, comme structures provoquant un artefact, on utilise au moins des bords, dont le vecteur normal a une composante dans la direction de l'axe de rotation dépassant en particulier une valeur de seuil.

5. Procédé suivant l'une des revendications précédentes, **caractérisé en ce que**, pour la modification du paramétrage, on modifie un noyau de reconstruction choisi en particulier par l'utilisateur, au moyen d'une fonction de modification, qui décrit la pondération plus forte des fréquences spatiales plus basses.

6. Procédé suivant l'une des revendications précédentes, **caractérisé en ce que**, avant la détermination de l'ensemble de données de base et de l'ensemble de données intermédiaire, on réduit la résolution des images de projection et, avant l'application de l'ensemble de données de correction, on en réaugmente la résolution à la résolution de l'ensemble de données d'image de tomodensitométrie assistée par ordinateur.

7. Procédé suivant l'une des revendications précédentes, **caractérisé en ce que** la partie d'enregistrement comprend le cœur d'un patient, dans lequel les premières images de projection sont rapportées dans le temps à l'apparition d'une certaine phase de mouvement dans le cycle cardiaque.

8. Procédé suivant la revendication 7, **caractérisé en ce que** l'on rassemble les deuxièmes images de projection de plusieurs apparitions décalées dans le temps de la certaine phase de mouvement.

9. Dispositif (4) de tomodensitométrie assistée par ordinateur comportant un dispositif (9) de commande constitué pour exécuter un procédé suivant l'une des revendications précédentes.

10. Programme d'ordinateur, qui exécute les stades d'un procédé suivant l'une des revendications 1 à 8, lorsqu'il est exécuté sur un dispositif informatique, en particulier un dispositif (9) de commande d'un dispositif (4) de tomodensitométrie assistée par ordinateur.

11. Support de données, déchiffrable électroniquement, sur lequel est mémorisé un programme d'ordinateur suivant la revendication 10.
